# EUROPEAN PATENT SPECIFICATION

(11) **EP 0 508 606 B1**
(45) Date of publication and mention of the grant of the patent: **29.01.1997**
(21) Application number: 92302118.2
(22) Date of filing: 12.03.1992
(51) Int. Cl.: G11B 20/10, H04N 5/92, H04N 7/30, H04N 5/94

(54) **Video-audio digital recording/reproducing apparatus**
Digitales Aufzeichnungs- und Wiedergabegerät für Video- und Audiosignale
Appareil d'enregistrement et de reproduction digitales audio et vidéo

(30) Priority: 13.03.1991 JP 48273/91
(43) Date of publication of application: 14.10.1992
(73) Proprietor: MITSUBISHI DENKI KABUSHIKI KAISHA, Tokyo (JP)
(72) Inventor: Sugiyama, Kazuhiro, c/o Denshi Shohin, 1 Babazusho, Nagaokakyo-shi, Kyoto-Fu (JP); Hongo, Kimitoshi, c/o Kyoto Jigyosho, Nagaokakyo-shi, Kyoto-Fu (JP); Ono, Yukari, c/o Denshi Shohin Kaihatsu Kenkyusho, Nagaokakyo-shi, Kyoto-Fu (JP); Onishi, Ken, c/o Denshi Shohin Kaihatsu Kenkyusho, Nagaokakyo-shi, Kyoto-Fu (JP)
(74) Representative: Nicholls, Michael John

(56) References cited:
- EP-A- 0 401 854
- EP-A- 0 495 490
- EP-A- 0 499 303
- PATENT ABSTRACTS OF JAPAN vol. 14, no. 344 (E-955) 25 July 1990 & JP-A-02 117 289 (MATSUSHITA ELECTRIC IND CO LTD) 1 May 1990
- IEEE 1991 INTERNATIONAL CONFERENCE ON CONSUMER ELECTRONICS DIGEST OF TECHNICAL PAPERS, 7 June 1991, ROSEMONT, ILLINOIS pages 186 - 187 S.I.KIM & AL. 'Bit rate reduction algorithm for a digital VCR'
- PATENT ABSTRACTS OF JAPAN vol. 10, no. 225 (P-484) (2281) 6 August 1986 & JP-A-61 061 275 (SONY CORP) 29 March 1986
- PATENT ABSTRACTS OF JAPAN vol. 14, no. 344 (E-955) 25 July 1990 & JP-A-02 117 289
- PATENT ABSTRACTS OF JAPAN vol. 10, no. 225 (P-484) (2281) 6 August 1986 & JP-A-61 061 275

## Description

This invention relates to a video-audio digital recording and reproducing apparatus in which an analog video signal and an analog audio signal are converted into digital signals to be recorded on a recording medium and recorded digital signals are reproduced in an analog form.

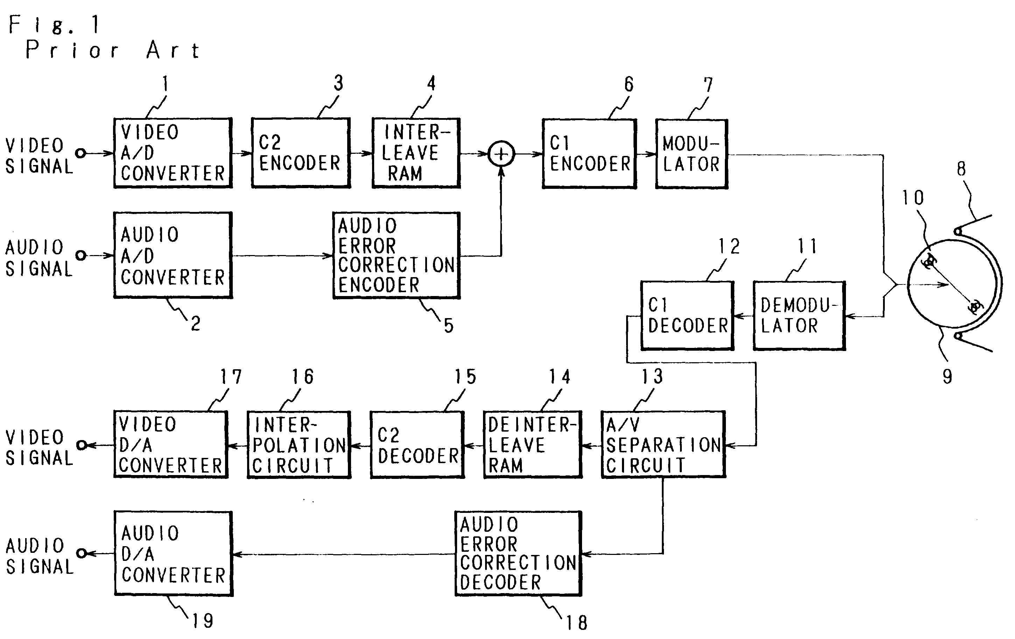

A video-audio digital recording and reproducing apparatus is known in the art which can record the analog video signal and the analog audio signal in a digital form on the recording medium such as a magnetic tape, a magnetic disk, an optical disk or the like and reproduce digital signals recorded on such a recording medium and convert them into analog signals. Fig. 1 of the accompanying drawings is a block diagram illustrating the configuration of a prior art video-audio digital recording and reproducing apparatus which is disclosed in Japanese Patent Application Laid-Open No. 61-61,275.

In Fig. 1, reference numerals 1 and 2 respectively indicate a video analog-digital (A/D) converter which converts the analog video signal into the digital signal, and an audio A/D converter which converts the analog audio signal into the digital signal. Video signals which has been converted into the digital signal by the video A/D converter 1 is supplied to a C2 encoder 3. The C2 encoder 3 derives a C2 parity in the error correction encoding of the video signal and adds it to the video signal. The video signal to which the C2 parity is added is then sent to an interleave random-access memory (RAM) 4 which in turn interleaves (shuffles) the input video data. The audio signal which has been converted into the digital signal by the audio A/D converter 2 is supplied to an audio error correction encoder 5. The audio error correction encoder 5 encodes the digital audio signal for error correction. The video data which has been shuffled by the interleave RAM 4 and the audio data which has been encoded by the audio error correction encoder 5 are synthesized to each other by an adder, and then the synthesized data is supplied to a C1 encoder 6. The C1 encoder 6 derives a C1 parity for the synthesized data and adds it to the data. The data to which the C1 parity is added is supplied to a modulator 7 which encodes the error correction encoded data for recording. The data encoded for recording is recorded on a magnetic tape 8 by a magnetic head 10 mounted on a rotating drum 9.

Reference numerals 11-19 in Fig.1 indicate elements of the reproducing system, and 11 indicates a demodulator which decodes reproduced data for recording. The data decoded for recording is then supplied to a C1 decoder 12. The C1 decoder 12 performs the error correction on the reproduced data on the basis of the C1 parity word, and the reproduced data which has been corrected is sent to an audio/video (A/V) separation circuit 13. The A/V separation circuit 13 separates the reproduced data into video data and audio data, and the former is supplied to a deinterleave RAM 14 and the latter to an audio error correction decoder 18. The deinterleave RAM 14 deinterleaves (deshuffles) the input video data, and the deshuffled video data is sent to a C2 decoder 15. The C2 decoder 15 performs the error correction on the deshuffled video data on the basis of the C2 parity word, and the corrected video signal is sent to an interpolation circuit 16 which interpolates the video signal in a case where it has been impossible to perform the error correction. A video digital-analog (D/A) converter 17 converts the digital video signal which is outputted from the interpolation circuit 16, into the analog signal. The audio error correction decoder 18 performs the error correction on the input audio data, and the corrected audio signal is supplied to an audio D/A converter 19 which in turn converts the digital audio signal the into the analog signal.

The operation of the prior art apparatus will be described.

The analog video signal is converted into the digital signal by the video A/D converter 1, and the digital video signal is supplied to the C2 encoder 3. The digital video data to which the C2 parity has been added in the C2 encoder 3 is subjected to a predetermined shuffling (interleaving) process in the interleave RAM 4, and then sent to the adder. In contrast, the analog audio signal is converted into the digital signal by the audio A/D converter 2, and the digital audio signal is encoded for error correction in the audio error correction encoder 5 and thereafter sent to the adder. In the adder, both these data are synthesized to each other, and the synthesized data is supplied to the C1 encoder 6, in which the C1 parity is added to the synthesized data. As a result, the cross interleaving process in which an error correction parity word is added before and after the interleaving process is carried out. The data which has been subjected to the encoding for error correction and the interleave process is encoded for recording by the modulator 7, and then the encoded data is recorded on the magnetic tape 8 by the magnetic head 10.

In the reproducing system, the digital data reproduced by the magnetic head 10 is decoded for recording by the demodulator 11, and the decoded data is corrected by the C1 decoder 12 on the basis of the C1 parity word. The output of the C1 decoder 12 is separated by the A/V separation circuit 13 into video data and audio data. The audio data is processed by the audio error correction decoder 18, and then the analog audio signal is reproduced by the audio D/A converter 19. In contrast, in the deinterleave RAM 14, the video data is subjected to the deshuffling (deinterleaving) process in which the data is rearranged to the original sequence, and then the C2 decoder 15 performs the error correction on the basis of the C2 parity word, or sets an error flag when it is not possible to correct an error. Thereafter, the video data is subjected to the primary or secondary signal interpolation by the interpolation circuit 16, and the analog video signal is reproduced by the video D/A converter 17.

The interleaving and deinterleaving processes in the thus configured digital recording and reproducing apparatus are usually done with the object of scattering errors in the decoding process and for converged errors such as burst errors.

Recently, in order to cope with digital data processing systems such as a digital video tape recorder (VTR), a recording method is widely employed in which the video signal is compressed by a high-efficiency encoding process and the compressed video data is recorded on a recording medium such as a magnetic tape. In a case where such a recording method is employed, the video signal is divided into blocks in a unit of a plurality of pixels, and each of these blocks is subjected to a high-efficiency encoding process. Since the manner of performing this encoding process varies depending upon the content of the video signal, the data amount is not always constant. In such a case, therefore, even if the interleaving process is done in the error correction, errors caused in the decoding process and for burst errors are not always scattered on a screen, and errors may become larger than expected.

EP-A-0401854 discloses an orthogonal transform coding device in which input signals are subdivided into large blocks which are in turn made up of small blocks of data. Subsequent to the orthogonal transform, a data amount estimating unit quantizes the small blocks with a plurality of quantizers so that an optimum quantizer may be selected. On this basis, the orthogonal transformed data is processed by a variable length encoder. The fourth example on which the precharacterising portion of appended claim 1 is based has a large block formed by assembling small blocks situated at various positions of the picture plane whereby the amount of information contained in the respective large blocks is substantially equal since the amount of information on the picture plane is scattered.

It is an object of the invention to provide a video-audio digital recording and reproducing apparatus which, even in a case that the video signal is compressed by a high-efficiency encoding process, is hardly affected by burst errors.

It is another object of the invention to provide a video-audio digital recording and reproducing apparatus which, even in a case that the video signal is compressed by a high-efficiency encoding process, can efficiently record the video signal on a recording medium and reduce the deterioration of the image quality.

According to the present invention, there is provided a video-audio digital recording apparatus in which digital video and audio signals are recorded on a recording medium, comprising:
storage means for dividing a digital video signal into blocks each having a plurality of pixels, for storing the blocked video signal, and for performing shuffling of the blocks within one or several fields; and
encoding means for reading the blocked video signal from said storage means, and for compressing and encoding the blocked video signal in a unit of a block, the encoding means comprising:
an orthogonal transformation circuit for performing an orthogonal transform on the video signal of each block;
an encoding circuit for performing a variable-length encoding on an output of said orthogonal transformation circuit; and
a control circuit for controlling the variable-length encoding in said encoding circuit; characterised in that
said control circuit estimates the total data amount of encoded data obtained by said encoding circuit for said one or several fields, on the basis of the output of said orthogonal transformation circuit, and controls the data amount of encoded data in a unit of a block in accordance with the estimated result so that the compressed data of said one or several fields converges to a predetermined amount of data.

The invention will be further described by way of example only with reference to the accompanying drawings, in which:-

Fig. 1 is a block diagram illustrating the configuration of a prior art video-audio digital recording and reproducing apparatus.

Fig. 2 is a block diagram illustrating the configuration of a video-audio digital recording and reproducing apparatus according to the invention.

Fig. 3 is a block diagram illustrating the inner configuration of a high-efficiency encoding circuit used in the apparatus of Fig. 2.

Fig. 4 is a diagram schematically showing an example of an input image.

Fig. 5 is a diagram showing the distribution of the data amount in a case where the input image shown in Fig. 4 is compressed by a high-efficiency encoding process.

Fig. 6 is a diagram showing an example of the sequence of reading blocks after the input image shown in Fig. 4 is compressed by a high-efficiency encoding.

Fig. 7 is a graph showing the variation of the accumulated data amount obtained when each block is read out in the sequence shown in Fig. 6.

Fig. 8 is a diagram showing another example of the sequence of reading blocks after the input image shown in Fig. 4 is compressed by a high-efficiency encoding.

Fig. 9 is a graph showing the variation of the accumulated data amount obtained when each block is read out from the blocks in the sequence shown in Fig. 8.

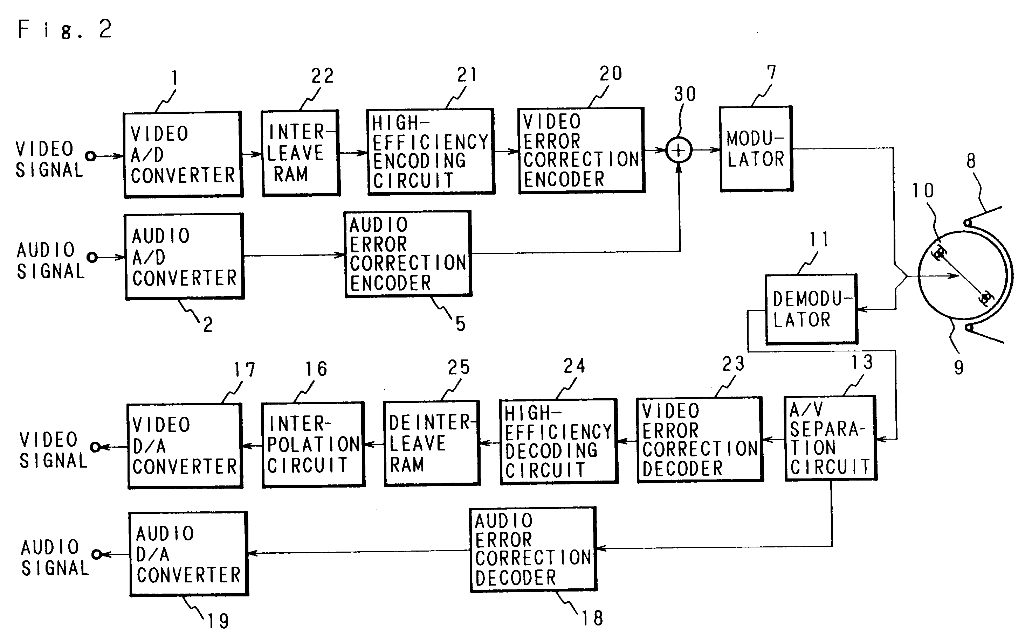

Fig. 2 is a block diagram illustrating the configuration of a video-audio digital recording and reproducing apparatus according to the invention. In Fig. 2, reference numerals 1 and 2 respectively indicate a video A/D converter which converts an analog video signal into a digital signal, and an audio A/D converter which converts an analog audio signal into a digital signal. The video signal is converted into the digital signal by the video A/D converter 1, and then supplied to an interleave RAM 22. The interleave RAM 22 divides the digital video signal into blocks each of a plurality of pixels, and performs the interleaving process with one block as a unit. The video signal read out from the interleave RAM 22 is supplied to a high-efficiency encoding circuit 21 which in turn compresses the video signal in a unit of one block. The compressed video signal is supplied to a video error correction encoder 20. The video error correction encoder 20 has a configuration in which the C2 encoder 3 and C1 encoder 6 used in the prior art apparatus of Fig. 1 are combined together, and derives C1 and C2 parities and adds them to the video signal to output the encoded video data to an adder 30. The audio signal is converted to the digital signal by the audio A/D converter 2 and supplied to an audio error correction encoder 5. The audio error correction encoder 5 encodes the digital audio signal for error correction, and the encoded audio data is sent to the adder 30. The encoded video data and the encoded audio data are synthesized to each other by the adder 30, and then supplied to a modulator 7 by which the data encoded for error correction is encoded for recording. The data encoded for recording is recorded on a magnetic tape 8 by a magnetic head 10 mounted on a rotating drum 9.

The configuration of the reproducing system will be described. Data which has been reproduced from the magnetic tape 8 is decoded for recording by a demodulator indicated by the numeral 11. The data decoded for recording is sent to an A/V separation circuit 13 in which the data decoded for recording is separated into video data and audio data. The video data is supplied to a video error correction decoder 23, and the audio data to an audio error correction decoder 18. The video error correction decoder 23 has a configuration in which the C1 decoder 12 and C2 decoder 15 used in the prior art apparatus of Fig. 1 are combined together, and performs the error correction on the basis of C1 and C2 parity words. The video data which has been corrected is supplied to a high-efficiency decoding circuit 24 by which the compressed video data is expanded, and the expanded video signal is sent to a deinterleave RAM 25. The deinterleave RAM 25 performs the deinterleaving process on the video signal in a unit of a block. Then, the video signal stored in the deinterleave RAM 25 is read out to be sent to an interpolation circuit 16 which interpolates the video signal in a case where it has been impossible to perform the error correction. A video D/A converter 17 converts the digital video signal into an analog signal. The audio error correction decoder 18 performs the errors correction on the input audio data, and the corrected audio signal is supplied to an audio D/A converter 19 which in turn converts the digital audio signal into an analog signal.

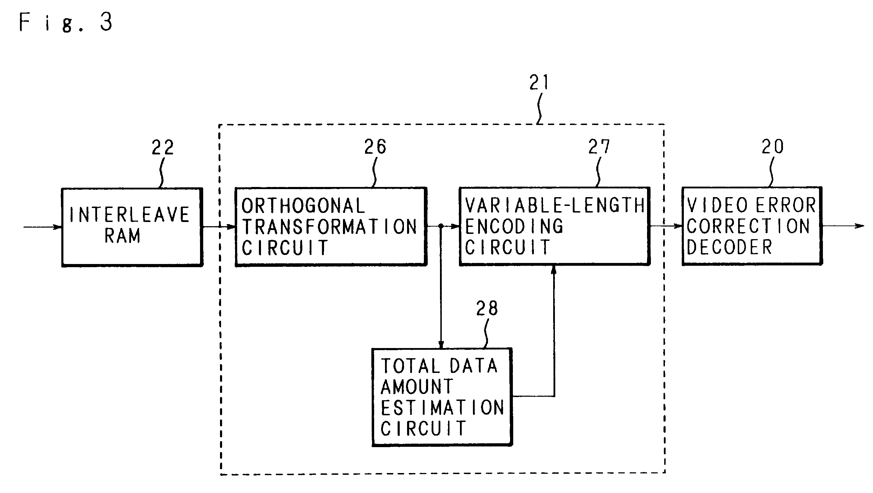

Fig. 3 is a block diagram illustrating the inner configuration of the high-efficiency encoding circuit 21 used in the recording system shown in Fig. 2. The high-efficiency encoding circuit 21 comprises an orthogonal transformation circuit 26 which performs the orthogonal transform on each of the data blocks in a unit of a block, a variable-length encoding circuit 27 which performs the variable-length encoding on the output of the orthogonal transformation circuit 26 in accordance with the content of the image, and a total data amount estimation circuit 28 which estimates the total data amount after the compression (i.e., after the variable-length encoding) on the basis of the data obtained before the high-efficiency encoding (i.e., on the basis of the output of the orthogonal transformation circuit 26). The total data amount estimation circuit 28 controls the data amount in the variable-length encoding circuit 27 with a block as a unit, so that all the data in a predetermined field ultimately converges in a specified track of the magnetic tape 8.

The operation of this apparatus will be described.

In the recording system, the digital video signal which has been converted by the video A/D converter 1 in a similar manner as the prior art apparatus is stored in the interleave RAM 22, and divided into blocks in a unit of a plurality of pixels. Then, the video signal is read out so that the interleaving process is performed in a unit of a block, and thereafter compressed by the high-efficiency encoding circuit 21. C1 and C2 parities are added to the compressed video data by the video error correction encoder 20, thereby encoding the video data for error correction. The digital audio signal which has been converted by the audio A/D converter 2 in a similar manner as the prior art apparatus is encoded for error correction by the audio error correction encoder 5. The video encoded data and the audio encoded data are synthesized to each other by the adder 30. The synthesized data is encoded for recording by the modulator 7, and then recorded on the magnetic tape 8 by the magnetic head 10.

In the reproducing system, the digital data reproduced from the magnetic tape 8 is decoded for recording by the demodulator 11, and the decoded data is separated by the A/V separation circuit 13 into video data and audio data. Errors in these video and audio data are corrected by the decoding for error correction in the video error correction decoder 23 and the audio error correction decoder 18, respectively. When it is impossible to correct an error, a flag is set to the corresponding data. Then, the compressed video data is expanded by the high-efficiency decoding circuit 24. The expanded data is sent to the deinterleave RAM 25 to be subjected to the deinterleaving process in a unit of a block, and thereafter respectively returned to the positions corresponding to those of the original video blocks. The video signal in which an error has riot been corrected and the error flag is on is subjected to the pixel interpolation along the horizontal and vertical directions or along the time axis by the interpolation circuit 16. Then, the analog video signal is reproduced by the video D/A converter 17.

In the high-efficiency encoding method employed in the above-described digital recording and reproducing apparatus, generally, the variable-length encoding is carried out after dividing the video signal into blocks (e.g., each of the blocks consisting of 8 × 8 pixels) and performing the orthogonal transform in a unit of a block. When compressed data is to be recorded on a recording medium such as a magnetic tape, it is necessary to store compressed data for one or several fields in a specified track in order to simplify special reproducing and editing processes. Since the quantizing and encoding processes in the employed high-efficiency encoding method are conducted in accordance with the content of video data in each block, the amount of compressed data in each block for one or several fields is not always constant. Depending upon the content of video data, therefore, there are cases where the amount of compressed data may be so large that the data cannot be recorded in a specified track, or inversely there are cases where the amount of compressed data may be so small that a considerably wide region of a specified track remains unrecorded. In order to ensure that compressed video data can be always recorded in a specified track, according to the embodiment, the total amount of compressed data is estimated by the total data amount estimation circuit 28 on the basis of the data obtained before the high-efficiency encoding, and the variable-length encoding circuit 27 controls the data amount with a block as a unit, so that the compressed video data in one or several fields ultimately converge in a specified track.

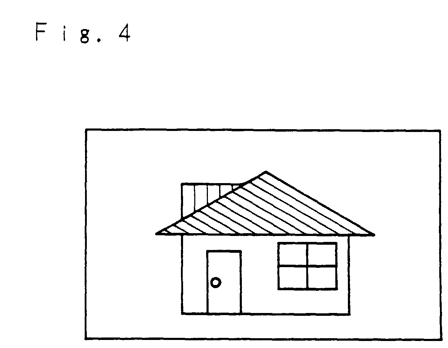

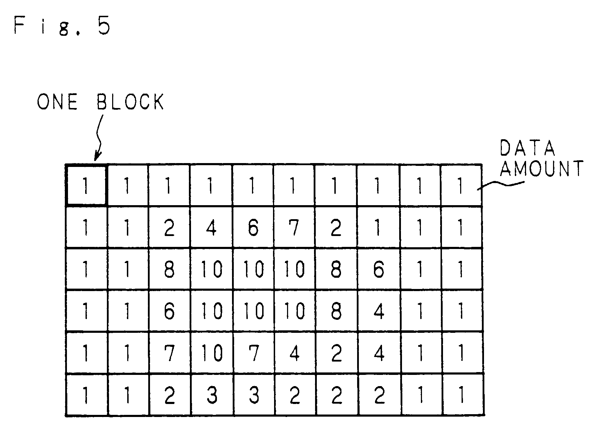

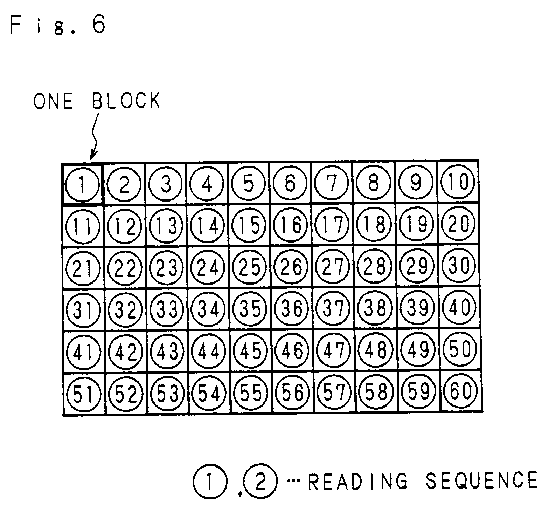

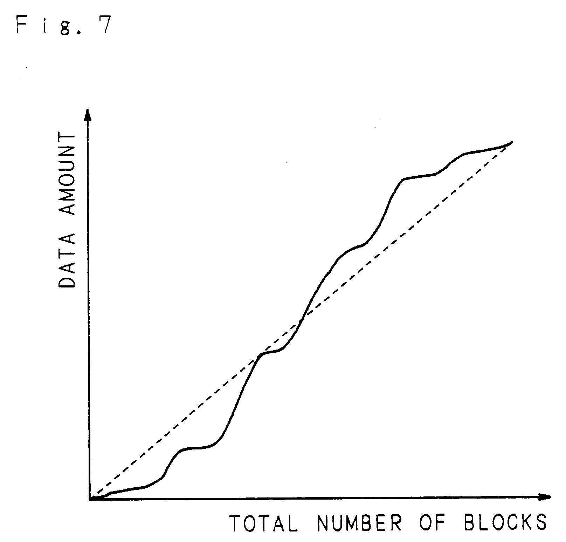

A case where the video signal indicative of an image of a house shown in Fig. 4 which has a large amount of data at the center area is inputted to the apparatus will be described. It is assumed that the high-efficiency encoding blocks are 60 blocks which are obtained by dividing a screen in six along the vertical direction and in ten along the horizontal direction, and that, when the high-efficiency encoding is performed on each of these blocks, these blocks have data amounts ranging from 1 to 10 as shown in Fig. 5. The video signal of each of these blocks is sequentially read out from the interleave RAM 22 with starting at the upper and left corner and proceeding along the horizontal direction as shown in Fig. 6. The numbers shown in a circle of each blocks in Fig. 6 indicate the sequence of reading the video signal. When the high-efficiency encoding is proceeded according to this sequence, the accumulated data amount in one field varies as shown in Fig. 7. In this illustrated case, the image correlation exists along the horizontal direction. Therefore, blocks having a large amount of compressed data are localized, resulting in that the accumulated data amount greatly varies when such a block is encoded in a high-efficiency. The broken straight line in Fig. 7 indicates an ideal variation of the accumulated data amount. If the accumulated data amount greatly deviates from this ideal variation, the final accumulated data amount cannot be within a prefixed total data amount, and hence the data amount is controlled. This causes the reduced accuracy of the compressed video data, i.e., the inferior image quality.

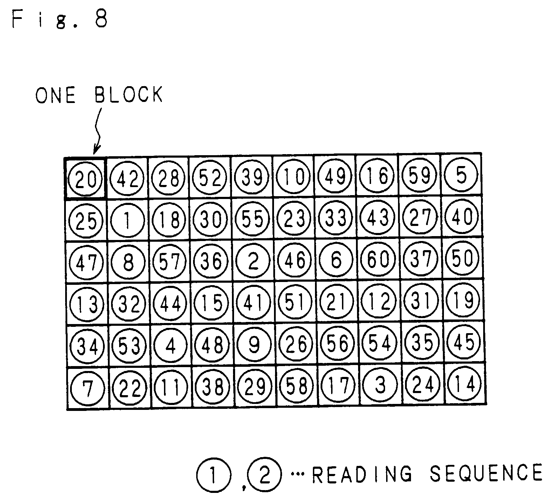

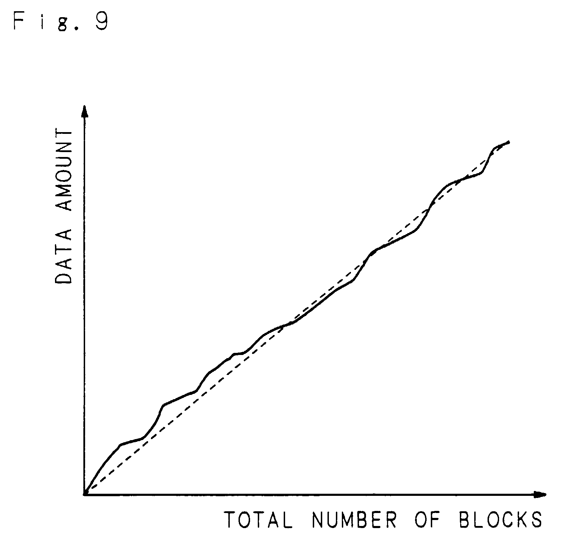

According to the invention, therefore, the blocks are randomly read out from the interleave RAM 22, for example, in the sequence shown in Fig. 8. This enables each block to be encoded in a high-efficiency irrespective of the image correlation, so that blocks having a greater amount of compressed data are scattered. As a result, the accumulated data amount in one field varies as shown in Fig. 9 with becoming closer to the ideal variation indicated by the broken straight line. This eliminates the necessity of controlling the data amount, and prevents the accuracy of compressed video data from deteriorating.

The reproduced video signal is written into the deinterleave RAM 25 in the same sequence as that of randomly reading the video signal from the interleave RAM 22. Consequently, each block can certainly be returned to its original position, thereby enabling the original image to be accurately reproduced.

Since in the above-described interleaving process the sequence of processing the video signal in a unit of a high-efficiency encoding block is random in the term of positions in the screen, the arrangement of blocks recorded on a recording medium is also random, resulting in that errors are not locally concentrated even if a burst error burst has occurred on a recording medium in the reproducing process.

As seen from the above description, according to the invention, since the interleave RAM 22 is disposed at the front stage of the high-efficiency encoding circuit 21 and the reading process is randomly conducted in a unit of a high-efficiency encoding block, it is possible to provide a video-audio digital recording and reproducing apparatus in which the degree of the bias in the data amount caused by the image correlation can be reduced so as to make the amount of the compressed data to be easily estimated, and the video signal can be encoded in a high-efficiency without reducing the accuracy of the compressed video data more than need, and the deterioration of the image quality can be reduced, and which is hardly affected by burst errors.

## Claims

1. A video-audio digital recording apparatus in which digital video and audio signals are recorded on a recording medium, comprising:
storage means (22) for dividing a digital video signal into blocks each having a plurality of pixels, for storing the blocked video signal, and for performing shuffling of the blocks within one or several fields; and
encoding means (21) for reading the blocked video signal from said storage means, and for compressing and encoding the blocked video signal in a unit of a block, the encoding means (21) comprising:
an orthogonal transformation circuit (26) for performing an orthogonal transform on the video signal of each block;
an encoding circuit (27) for performing a variable-length encoding on an output of said orthogonal transformation circuit (26); and
a control circuit (28) for controlling the variable-length encoding in said encoding circuit (27); characterised in that
said control circuit (28) estimates the total data amount of encoded data obtained by said encoding circuit (27) for said one or several fields, on the basis of the output of said orthogonal transformation circuit (26), and controls the data amount of encoded data in a unit of a block in accordance with the estimated result so that the compressed data of said one or several fields converges to a predetermined amount of data.

2. A video-audio digital recording apparatus according to claim 1, further comprising:
means (20) for adding an error correction code to encoded data from said encoding means (21) to obtain video data with correction code;
means (5) for adding an error correction code to the digital audio signal to obtain audio data with correction code; and
means (30) for synthesizing the obtained video data with correction code and the obtained audio data with correction code, and for recording the synthesized data on the recording medium.

3. A video-audio digital recording and reproducing apparatus in which digital video and audio signals are recorded on a recording medium and original video and audio signals are reproduced from the recording medium, comprising:
the video-audio digital recording apparatus of claims 1 or 2;

4. A video-audio digital recording and reproducing apparatus according to claim 3, further comprising:
means (11,13) for reproducing the synthesized data from the recording medium (8), and for separating the synthesized data into the video data with correction code and the audio data with correction code;
means (23) for decoding the error correction code of the separated video data with correction mode; and
means (18) for decoding the error correction code of the separated audio data with correction code.

5. A video-audio digital recording and reproducing apparatus according to claim 3 or 4 further comprising:
means (17) for reading the digital video signal from said second storage means (16), and converting it into the analog video signal; and
means (19) for converting an output of said audio error correction decoding means (18) to the analog audio signal.

6. An apparatus according to any preceding claim further comprising:
means (1) for converting an input analog video signal into a digital video signal;
means (2) for converting an input analog audio signal into a digital audio signal.

## Patentansprüche

1. Digitales Video-Audio-Aufzeichnungsgerät, bei dem digitale Video- und Audio-Signale auf einem Aufzeichnungsmedium aufgezeichnet werden mit:
Speichermitteln (22) zum Aufteilen eines digitalen Videosignals in Blöcke, die jeweils eine Mehrzahl von Pixeln aufweisen, zum Speichern der in Blöcke aufgeteilten Videosignale und zum Durchführen des Umordnens der Blöcke in ein oder mehrere Felder, und
Kodiermitteln (21) zum Lesen der in Blöcke aufgeteilten Videosignale aus den Speichermitteln und zum Komprimieren und Kodieren der in Blöcke aufgeteilten Videosignale in eine Einheit eines Blocks, wobei die Kodiermittel (21) umfassen:
einen Orthogonal-Transformationskreis (26) zum Durchführen einer orthogonalen Transformation an dem Videosignal jedes Blocks,
einen Kodierkreis zum Durchführen einer Kodierung variabler Länge der Ausgangssignale des Orthogonal-Transformationskreises (26), und
einen Steuerkreis (28) zum Steuern der Kodierung variabler Länge in dem Kodierkreis (27),
**dadurch gekennzeichnet,**
daß der Steuerkreis (28) die gesamte Datenmenge von kodierten Daten, die von dem Kodierkreis (27) für das eine oder die mehreren Felder erhalten werden, auf der Grundlage der Ausgangssignale des Orthogonal-Transformationskreises (26) schätzt und die Datenmenge von kodierten Daten in einer Einheit eines Blocks in Übereinstimmung mit dem geschätzten Ergebnis so steuert, daß die komprimierten Daten des einen oder der Mehrzahl von Feldern zu einer vorbestimmten Datenmenge konvergiert.

2. Digitales Video-Audio-Aufzeichnungsgerät nach Anspruch 1, weiter umfassend:
Mittel (20) zum Addieren eines Fehlerkorrekturcodes zu kodierten Daten von den Kodiermitteln (21), um Videodaten mit Korrekturcode zu erhalten,
Mittel (5) zum Addieren eines Fehlerkorrekturcodes zu dem digitalen Audiosignal, um Audiodaten mit Korrekturcode zu erhalten, und
Mittel 30) zum Zusammensetzen der erhaltenen Videodaten mit Korrekturcode und die erhaltenen Audiodaten mit Korrekturcode und zum Aufzeichnen der zusammengesetzten Daten auf das Aufzeichnungsmedium.

3. Digitales Video-Audio-Aufzeichnungs- und Wiedergabegerät, bei dem digitale Video- und Audiosignale auf ein Aufzeichnungsmedium aufgezeichnet werden und die originalen Video- und Audiosignale von dem Aufzeichnungsmedium wiedergegeben werden mit
dem digitalen Video- und Audio-Aufzeichnungsgerät nach Anspruch 1 oder 2.

4. Digitales Video-Audio-Aufzeichnungs- und Wiedergabegerät nach Anspruch 3, weiter umfassend: Mittel (11,13) zum Wiedergeben der zusammengesetzten Daten von dem Aufzeichnungsmedium (8) und zum Trennen der zusammengesetzten Daten in die Videodaten mit Korrekturcode und die Audiodaten mit Korrekturcode,
Mittel (23) zum Dekodieren des Fehlerkorrekturcodes der getrennten Videodaten mit Korrekturcode, und
Mittel (18) zum Dekodieren des Fehlerkorrekturcodes der getrennten Audiodaten mit Korrekturcode.

5. Digitales Video-Audio-Aufzeichnungs- und Wiedergabegerät nach Anspruch 3 oder 4, weiter umfassend:
Mittel (17) zum Lesen der digitalen Videodaten aus den zweiten Speichermitteln und zum Umwandeln derselben in die analogen Videosignale, und
Mittel (19) zum Umwandeln von Ausgangssignalen der Audio-Fehlerkorrektur-Dekodiermittel (18) in die analogen Audiosignale.

6. Gerät nach einem der vorhergehenden Ansprüche, weiter umfassend:
Mittel (1) zum Umwandeln eines analogen Eingangssignals in ein digitales Videosignal,
Mittel (2) zum Umwandeln eines analogen Audiosignals in ein digitales Audiosignal.

## Revendications

1. Appareil d'enregistrement numérique vidéo-audio dans lequel des signaux vidéo et audio numériques sont enregistrés sur un support d'enregistrement, et comprenant :
des moyens de stockage (22) pour diviser un signal vidéo numérique en blocs ayant chacun une série de pixels, pour stocker le signal vidéo en blocs et pour effectuer un brassage des blocs dans un ou plusieurs champs, et
des moyens de codage (21) pour lire le signal vidéo en blocs dans lesdits moyens de stockage et pour comprimer et coder le signal vidéo en blocs par unité d'un bloc, les moyens de codage comprenant :
un circuit de transformation orthogonale (26) pour effectuer une transformation orthogonale sur le signal vidéo de chaque bloc,
un circuit de codage (27) pour effectuer un codage de longueur variable sur une sortie dudit circuit de transformation orthogonale (26), et
un circuit de commande (28) pour commander le codage de longueur variable dans ledit circuit de codage (27), caractérisé en ce que :
ledit circuit de commande (28) estime la quantité totale de données codées obtenues par ledit circuit de codage (27) pour ledit un ou plusieurs champs, sur base de la sortie dudit circuit de transformation orthogonale (26), et commande la quantité de données codées dans une unité d'un bloc en fonction du résultat estimé de telle sorte que les données comprimées dudit un ou plusieurs champs convergent en une quantité prédéterminée de données.

2. Appareil d'enregistrement numérique vidéo-audio selon la revendication 1, comprenant par ailleurs:
des moyens (20) pour additionner un code de correction d'erreurs aux données provenant desdits moyens de codage (21) pour obtenir des données vidéo avec un code de correction,
des moyens (5) pour ajouter un code de correction d'erreurs au signal audio numérique pour obtenir des données audio ayant un code de correction, et
des moyens (30) pour synthétiser les données vidéo obtenues avec le code de correction et les données audio obtenues avec le code de correction et pour enregistrer les données synthétisées sur le support d'enregistrement.

3. Appareil d'enregistrement et de reproduction numériques vidéo-audio dans lequel les signaux vidéo et audio numériques sont enregistrés sur un support d'enregistrement et les signaux vidéo et les signaux audio originaux sont reproduits à partir du support d'enregistrement, comprenant :
l'appareil d'enregistrement numérique vidéo-audio selon la revendication 1 ou 2.

4. Appareil d'enregistrement et de reproduction numériques vidéo-audio selon la revendication 3, comprenant par ailleurs :
des moyens (11, 13) pour reproduire les données synthétisées à partir du support d'enregistrement (8) et pour séparer les données synthétisées en données vidéo avec un code de correction et en données audio avec un code de correction,
des moyens (23) pour décoder le code de correction d'erreurs des données vidéo séparées avec le mode de correction, et
des moyens (18) pour décoder le code de correction d'erreurs des données audio séparées avec le code de correction.

5. Appareil d'enregistrement et de reproduction numériques vidéo-audio selon la revendication 3 ou 4, comprenant par ailleurs :
des moyens (17) pour lire le signal vidéo numérique dans lesdits deuxièmes moyens de stockage (16) et le convertir en un signal vidéo analogique, et
des moyens (19) pour convertir une sortie desdits moyens de décodage de correction d'erreurs audio (18) en signal audio analogique.

6. Appareil selon l'une quelconque des revendications précédentes, comprenant par ailleurs :
des moyens (1) pour convertir un signal vidéo analogique d'entrée en un signal vidéo numérique, et
des moyens (2) pour convertir un signal audio analogique d'entrée en un signal audio numérique.
